# FASCICULE DE BREVET EUROPEEN

(11) **EP 3 568 683 B1**
(45) Date de publication et mention de la délivrance du brevet: **11.12.2024**
(21) Numéro de dépôt: 18700156.5
(22) Date de dépôt: 10.01.2018
(51) Int. Cl.: A62C 5/02, A62C 99/00, G01M 3/28

(54) **DISPOSITIF ET PROCEDE DE TEST D'ETANCHEITE**
VORRICHTUNG UND VERFAHREN ZUM TESTEN EINER DICHTUNG
DEVICE AND METHOD FOR TESTING SEALING

(30) Priorité: 10.01.2017 FR 1750204
(43) Date de publication de la demande: 20.11.2019
(73) Titulaire: Suez International, 92040 Paris La Défense Cedex (FR)
(72) Inventeur: ISSARTEL, Eric, 86210 Vouneuil-Sur-Vienne (FR)
(74) Mandataire: Fédit-Loriot
(86) Numéro de dépôt international: PCT/EP2018/050549
(87) Numéro de publication internationale: WO 2018/130564

(56) Documents cités:
- GB-A- 2 237 393
- JP-A- S58 198 741
- US-A1- 2016 223 426

## Description

### Domaine technique

La présente invention se rapporte au domaine des systèmes d'obturation de réservoirs de stockage de fluide ainsi qu'au domaine des systèmes de raccordement de canalisations.

À titre d'exemple non limitatif, l'invention peut être mise en oeuvre dans une installation de protection incendie par mousse pour usine de traitement de déchets.

La présente invention concerne plus particulièrement un dispositif et un procédé de test d'étanchéité de tels systèmes.

### État de la technique antérieure

De nombreuses installations industrielles, par exemple de protection incendie par projection de mousse, comprennent un réservoir doté d'un trou d'homme qu'il est nécessaire de refermer de manière étanche.

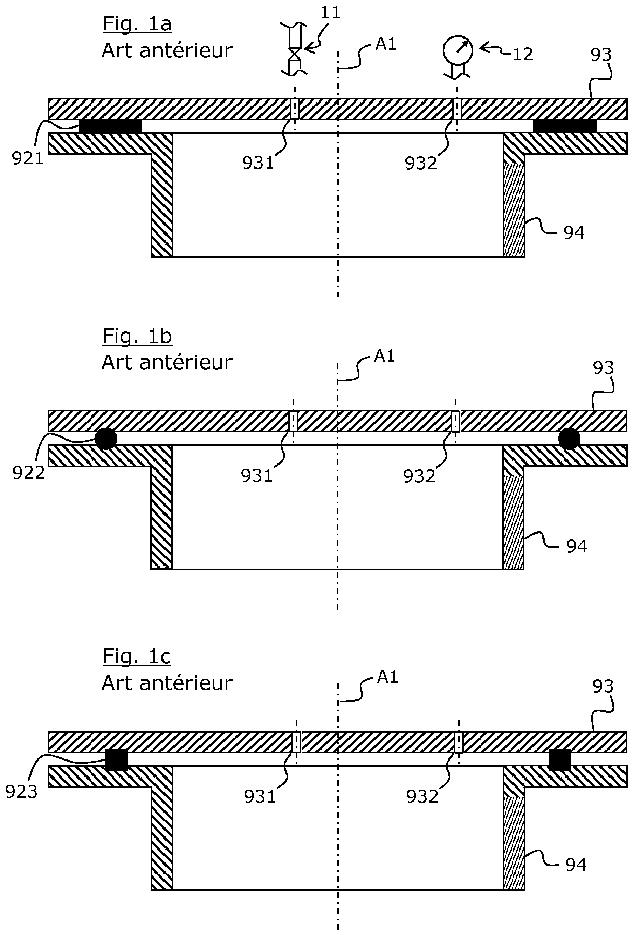

On connaît dans l'état de la technique antérieure des systèmes d'obturation comprenant un couvercle boulonné à une bride de fixation soudée au réservoir. L'étanchéité d'un tel ensemble couvercle-bride est typiquement assurée par un joint d'étanchéité plat (Fig. 1a), torique (Fig. 1b) ou encore de section carrée (Fig. 1c).

On connaît aussi dans l'état de la technique antérieure des systèmes de jointure permettant de relier entre elles des canalisations.

Pour tester l'étanchéité de tels systèmes, on remplit le réservoir ou les canalisations d'un fluide de test (gaz ou liquide) et on met ce fluide de test sous pression.

Dans le cas des systèmes d'obturation, il est nécessaire de percer le couvercle pour le doter d'une vanne permettant la pressurisation de l'ensemble, ce perçage constituant lui-même un risque de fuite supplémentaire.

Dans le cas des systèmes de jointure, il est nécessaire de bouchonner les canalisations.

Lorsque le réservoir ou les canalisations ainsi bouchonnées sont remplis du fluide de test sous pression, on vérifie si la pression diminue au cours du temps. L'étanchéité est considérée satisfaisante lorsque l'on constate une absence de perte de pression au cours du temps.

Un tel procédé de test entraîne un risque de pollution du fluide stocké dans le réservoir ou acheminé par les canalisations et de pollution de l'environnement extérieur à l'installation par ce fluide, ce qui peut entraîner des problèmes sanitaires lorsque ce fluide est toxique. En outre, un tel procédé de test nécessite de remplir l'intégralité du système à tester de fluide de test, ce qui dans le cas de canalisations ou réservoir de grande taille nécessite une quantité de fluide de test élevée et induit donc des coûts supplémentaires pour l'opérateur.

Un but de la présente invention est de remédier à ces inconvénients en proposant un dispositif et un procédé de test d'étanchéité limitant ou annulant le risque de fuite et/ou de pollution.

US 2016/223426A1 décrit un dispositif de test d'étanchéité d'un joint et comprend une section de test constituée de deux plaques entre lesquelles est serré le joint à tester.

GB 2 237 393 A décrit un dispositif de test d'étanchéité d'une installation du type comprenant un réservoir destiné à stocker un premier fluide dans un espace intérieur de ce réservoir ou du type comprenant deux canalisations et une jonction entre ces deux canalisations.

JP S58 198741 A décrit un dispositif de test d'étanchéité d'une installation du type comprenant un réservoir destiné à stocker un premier fluide dans un espace intérieur de ce réservoir.

### Exposé de l'invention

À cet effet, l'invention concerne, selon la revendication 1, un dispositif de test d'étanchéité d'une installation :
- du type comprenant un réservoir destiné à stocker un premier fluide dans un espace intérieur de ce réservoir, ou
- du type comprenant deux canalisations et une jonction entre ces deux canalisations, ces canalisations étant destinées à transporter un premier fluide dans un espace intérieur de ces canalisations,

ce dispositif comprenant :
   - un système de pressurisation agencé pour mettre un fluide de test sous pression dans le dispositif, et
   - un système de mesure de pression agencé pour mesurer la pression du fluide de test dans le dispositif,
ce dispositif comprenant en outre :
   - une chambre de pressurisation, et
   - un premier élément d'étanchéité, par exemple un joint torique, agencé pour isoler la chambre de pressurisation dudit espace intérieur,
   et:
   - le système de pressurisation étant agencé pour mettre le fluide de test sous pression dans la chambre de pressurisation, et
   - le système de mesure de pression étant agencé pour mesurer la pression du fluide de test dans la chambre de pressurisation,
ce dispositif étant caractérisé en ce que la chambre de pressurisation est annulaire et délimitée par une bride de fixation,
et en ce que le dispositif comprend en outre un couvercle et la bride de fixation, la bride de fixation étant agencée sur le réservoir pour fixer un couvercle au réservoir, la bride de fixation étant agencée pour fixer le couvercle au réservoir, le couvercle et la bride de fixation étant agencés pour délimiter la chambre de pressurisation,
ou en ce que la bride de fixation est agencée sur une canalisation pour constituer une jonction avec la bride de fixation d'une canalisation, ces brides de fixation étant agencées pour fixer ensemble les deux canalisations, et pour délimiter la chambre de pressurisation.

Dans un mode de réalisation, le fluide de test peut être un liquide limitant les risques d'explosion en cas de fuite, par exemple de l'eau.

Dans un mode de réalisation, le fluide de test peut être un gaz tel que l'air, par exemple comprimé.

Dans un mode de réalisation, le fluide de test peut être un gaz comportant de l'hélium. L'hélium étant un gaz rare, celui-ci pourrait ainsi faciliter la localisation du lieu exact de la fuite.

Dans un mode de réalisation, le système de mesure de pression peut être un manomètre à lecture directe ou un piézomètre à lecture électronique.

La pressurisation peut ainsi être réalisée dans un volume relativement faible, c'est-à-dire très inférieur au volume dudit espace intérieur.

L'invention permet donc d'annuler ou de réduire le risque de fuite et/ou de pollution / contamination du premier fluide stocké dans un réservoir ou circulant dans une canalisation.

Le premier élément d'étanchéité peut être un joint torique ou un joint plat ou un joint de section carrée ou tout autre type de joint adapté aux dimensions, matériaux et pressions utilisés ou mis en oeuvre.

De préférence, le dispositif selon l'invention peut comprendre en outre un deuxième élément d'étanchéité agencé pour isoler la chambre de pressurisation de l'extérieur de ladite installation.

Ce deuxième élément d'étanchéité permet de réaliser une étanchéité supplémentaire, indépendante de celle assurée par le premier élément d'étanchéité.

De préférence, lesdits premier et deuxième éléments d'étanchéité peuvent délimiter la chambre de pressurisation.

Selon une première variante de réalisation, ladite installation comprend un réservoir, le dispositif selon l'invention comprend en outre un couvercle et la bride de fixation, le couvercle étant agencé pour fermer le réservoir, la bride de fixation étant agencée pour fixer le couvercle au réservoir, le couvercle et la bride de fixation étant agencés pour délimiter la chambre de pressurisation.

Dans un mode de réalisation selon cette première variante de réalisation, le couvercle et/ou la bride de fixation peuvent comprendre une rainure et la chambre de pressurisation peut avoir un volume constitué par cette rainure.

Selon une deuxième variante de réalisation, ladite installation peut comprendre deux canalisations et une jonction entre ces deux canalisations, le dispositif selon l'invention pouvant comprendre en outre une ou plusieurs brides de fixation constituant ladite jonction, ces brides de fixation étant agencées pour :
- fixer ensemble les deux canalisations, et
- délimiter la chambre de pressurisation.

Selon l'invention, la chambre de pressurisation est annulaire.

Une chambre de pressurisation annulaire permet d'utiliser, en guise d'éléments d'étanchéité, des joints de forme annulaire. Les joints de forme annulaire sont plus faciles à usiner que les joints de forme carrée ou d'autre forme.

Alternativement, la chambre de pressurisation pourrait être de forme carrée ou ovale, par exemple en cas d'utilisation du dispositif sur un réservoir ou des canalisations ayant une telle forme.

Selon la revendication 5, l'invention concerne aussi un procédé de test d'étanchéité d'une installation :
- du type comprenant un réservoir destiné à stocker un premier fluide dans un espace intérieur de ce réservoir, ou
- du type comprenant deux canalisations et une jonction entre ces deux canalisations, ces canalisations étant destinées à transporter un premier fluide dans un espace intérieur de ces canalisations,
ce procédé mettant en oeuvre le dispositif selon l'invention et comprenant :
- une mise sous pression du fluide de test dans la chambre de pressurisation à l'aide du système de pressurisation,
- une mesure de la pression du fluide de test dans la chambre de pressurisation à l'aide du système de mesure de pression.

Les avantages conférés par un tel procédé sont similaires aux avantages conférés par le dispositif selon l'invention.

### Description des figures et modes de réalisation

D'autres avantages et particularités de l'invention apparaîtront à la lecture de la description détaillée de mises en oeuvre et de modes de réalisation nullement limitatifs, et des dessins annexés suivants :
- les figures 1a, 1b et 1c représentent un dispositif de l'art antérieur comportant les éléments d'étanchéité suivants :
   ∘ figure 1a : joint plat,
   ∘ figure 1b : joint torique,
   ∘ figure 1c : joint de section carrée ;
- la figure 2 représente un dispositif selon l'invention ;
- la figure 3 représente une bride de fixation du dispositif de la figure 2 ;
- la figure 4 représente un couvercle du dispositif de la figure 2 ;
- la figure 5 représente un premier type d'installation doté d'un dispositif selon l'invention ;
- la figure 6 représente un deuxième type d'installation dotée d'un dispositif selon l'invention.

Les modes de réalisation décrits ci-après étant nullement limitatifs, on pourra notamment considérer des variantes de l'invention ne comprenant qu'une sélection de caractéristiques décrites, isolées des autres caractéristiques décrites - même si cette sélection est isolée au sein d'une phrase comprenant ces autres caractéristiques - si cette sélection de caractéristiques est suffisante pour conférer un avantage technique ou pour différencier l'invention par rapport à l'état de la technique antérieure. Cette sélection comprend au moins une caractéristique, de préférence fonctionnelle sans détails structurels, ou avec seulement une partie des détails structurels si cette partie uniquement est suffisante pour conférer un avantage technique ou pour différencier l'invention par rapport à l'état de la technique antérieure.

### Art antérieur

Les figures 1a, 1b et 1c montrent un dispositif de test d'étanchéité de l'art antérieur pour une installation du type comportant un réservoir (non représenté). Plus précisément, ce dispositif de l'art antérieur comprend :
- un couvercle 93 agencé pour fermer le réservoir (non représenté),
- une bride de fixation 94 agencée pour fixer le couvercle 93 au réservoir (non représenté),
- un système de pressurisation 11 agencé pour mettre un fluide de test sous pression dans le réservoir via un orifice 931 réalisé dans le couvercle 93,
- un système de mesure de pression 12 tel qu'un manomètre agencé pour mesurer la pression du fluide de test dans le réservoir, via un orifice 932.

Typiquement, la bride de fixation 94 est enchâssée puis soudée sur le réservoir (non représenté). Le couvercle 93 est fixé à la bride 94 à l'aide de moyens de fixation de type vis-écrou (non représentés). L'étanchéité est assurée par un élément d'étanchéité qui peut être un joint plat 921 (Fig. 1a), un joint torique 922 (Fig. 1b), ou un joint de section carrée 923 (Fig. 1c).

Dans ces exemples, le couvercle 93, la bride de fixation 94 ainsi que l'élément d'étanchéité 921-923 sont des solides de révolution relativement à un axe A1.

### Première variante de réalisation de l'invention

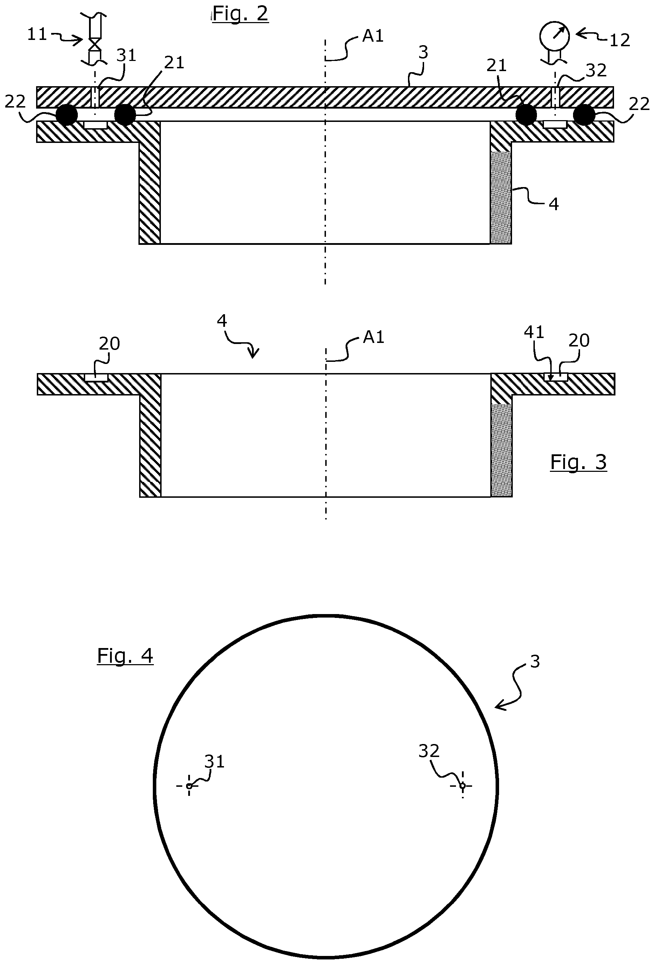

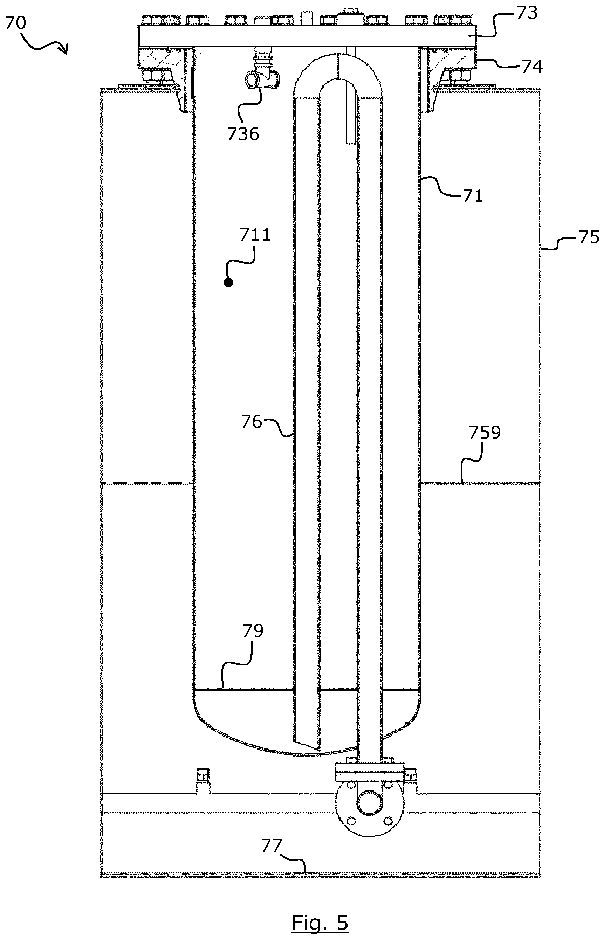

La figure 2 montre un dispositif de test d'étanchéité selon l'invention. Ce dispositif peut être monté sur l'installation 70 illustrée en figure 5. Cette installation 70 est du type comprenant un réservoir 71 destiné à stocker un premier fluide 79 dans un espace intérieur 711 de ce réservoir 71.

Similairement au dispositif de l'art antérieur, ce dispositif selon l'invention comprend :
- un couvercle 3, 73 agencé pour fermer le réservoir 71,
- une bride de fixation 4, 74 agencée pour fixer le couvercle 3, 73 au réservoir 71 - la bride 4, 74 est typiquement enchâssée puis soudée sur le réservoir 71,
- un système de pressurisation 11 agencé pour mettre un fluide de test sous pression dans le dispositif (Fig. 2) - le fluide de test peut être un gaz tel que l'air comprimé ou un liquide,
- un système de mesure de pression 12, tel qu'un manomètre, agencé pour mesurer la pression du fluide de test dans le dispositif (Fig. 2).

Contrairement au dispositif de l'art antérieur, le dispositif selon l'invention comprend en outre :
- une chambre de pressurisation 20, et
- un premier élément d'étanchéité 21, par exemple un joint torique, agencé pour isoler la chambre de pressurisation 20 dudit espace intérieur 711.

En outre, contrairement au dispositif de l'art antérieur (comparer Fig. 1a et Fig. 2) :
- le système de pressurisation 11 est agencé pour mettre le fluide de test sous pression dans la chambre de pressurisation 20, et
- le système de mesure de pression 12 est agencé pour mesurer la pression du fluide de test dans la chambre de pressurisation 20.

Pour mettre le fluide de test sous pression dans la chambre de pressurisation 20, le système de pressurisation 11 est relié à la chambre 20 par un orifice 31 réalisé dans le couvercle 3, cet orifice 31 débouchant sur la chambre 20 lorsque le couvercle 3 est assemblé à la bride de fixation 4.

Pour mesurer la pression du fluide de test dans la chambre de pressurisation 20, le système de mesure de pression 12 est relié à la chambre 20 par un orifice 32 réalisé dans le couvercle 3, cet orifice 32 débouchant sur la chambre 20 lors le couvercle 3 est assemblé à la bride de fixation 4.

Dans cet exemple, les orifices 31 et 32 sont distincts (voir Fig. 2 et 4).

Dans un exemple de réalisation non représenté, un même orifice pourrait être utilisé pour relier les systèmes 11 et 12 à la chambre 20.

En référence à la figure 2, le couvercle 3 et la bride de fixation 4 sont agencés pour délimiter la chambre de pressurisation 20.

Comme le montre l'exemple de la figure 2, le dispositif selon l'invention comprend en outre un deuxième élément d'étanchéité 22 agencé pour isoler la chambre de pressurisation 20 de l'extérieur de ladite installation.

Le deuxième élément d'étanchéité 22 est de préférence un joint torique.

On voit en figure 2 que lesdits premier 21 et deuxième 22 éléments d'étanchéité délimitent, eux aussi, la chambre de pressurisation 20.

Ainsi, la chambre de pressurisation est délimitée :
- par les deux éléments d'étanchéité 21 et 22,
- par le couvercle 3, et
- par la bride de fixation 4.

Dans cet exemple, la bride de fixation 4 comprend une rainure 41 (voir Fig. 3). Selon cet agencement, la chambre de pressurisation 20 a un volume constitué par cette rainure 41.

Dans des modes de réalisation non représentés, une rainure pourrait être usinée, alternativement ou complémentairement, dans le couvercle 3.

La figure 2 illustre de manière schématique un assemblage du couvercle 3 et de la bride de fixation 4. Dans une mise en oeuvre réelle du dispositif, le couvercle 3 est serré contre la bride 4 par des moyens de fixation de type vis-écrou (non représentés). Dans l'exemple de l'installation 70 de la figure 5, on utilise vingt vis-écrous ayant un filetage M30 auxquels on applique un couple de serrage de 308 Nm. Le serrage du couvercle 3 contre la bride 4 entraîne un écrasement des joints 21 et 22. Après serrage, le volume 20 est donc essentiellement constitué par la rainure 41 (Fig. 3).

Dans cet exemple de réalisation, le couvercle 3, la bride 4, et les éléments d'étanchéité 21, 22 sont des solides de révolution relativement à un axe A1.

Dans cet exemple de réalisation, la chambre de pressurisation 20 est annulaire.

La chambre 20 définit en outre un anneau d'axe A1.

La figure 5 montre une installation de protection incendie par mousse.

Cette installation comprend une cuve 75 dans laquelle est enchâssé le réservoir 71.

La cuve 75 a typiquement une capacité de 12000 litres et contient un liquide 759 tel que de l'eau.

Le réservoir 71, appelé réservoir d'émulseur, a typiquement une capacité de 300 litres et le premier fluide 79 qu'il contient est un produit moussant.

Le couvercle 73 comprend une entrée 736 agencée pour introduire dans le réservoir 71 de l'air comprimé.

Un conduit 76 en col de cygne permet d'acheminer le produit moussant depuis le réservoir 71 jusqu'à la cuve 75 lorsque l'espace intérieur 711 du réservoir 71 est mis sous pression après introduction d'air comprimé par l'entrée 736.

Typiquement, lorsque la pression dans la cuve 75 dépasse un seuil de pression prédéterminé, par exemple 0,7 MPa, une vanne 77 est ouverte pour répandre le mélange d'eau et de produit moussant sur un incendie.

On voit que la pressurisation du réservoir 71 se traduit par une pressurisation consécutive de la cuve 75 par l'intermédiaire du conduit 76.

Par conséquent, la réalisation d'un test d'étanchéité selon l'art antérieur serait problématique car l'espace intérieur 711 du réservoir 71 serait mis sous pression. Cela se traduirait par un déplacement de produit moussant depuis le réservoir 71 jusqu'à la cuve 75. À l'heure actuelle, on remédie à ce problème en installant une pompe pour piloter le transfert de produit moussant du réservoir 71 à la cuve 75 et empêcher un tel transfert lors du test d'étanchéité. Une telle pompe double toutefois le coût de l'installation et implique notamment des opérations de maintenance supplémentaires.

A contrario, le dispositif de test d'étanchéité selon l'invention permet de ne pas pressuriser l'espace intérieur 711 du réservoir 71 et remédie ainsi aux différents inconvénients de l'art antérieur.

### Deuxième variante de réalisation de l'invention

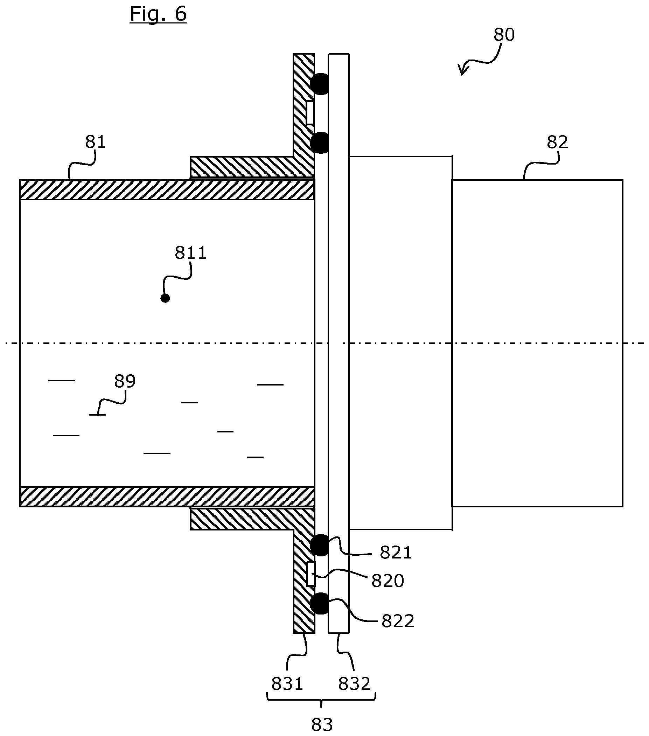

La figure 6 montre une autre installation 80 mettant en oeuvre un dispositif selon l'invention.

Cette installation 80 est du type comprenant deux canalisations 81 et 82. La canalisation 81 est représentée en coupe longitudinale radiale de manière à faire apparaître un espace intérieur 811 de ces canalisations.

Ces canalisations 81 et 82 sont destinées à transporter un premier fluide 89, typiquement un liquide tel que de l'eau, dans ledit espace intérieur 811 de ces canalisations.

L'installation 80 comprend une jonction 83 entre les deux canalisations 81 et 82.

Plus précisément, dans cet exemple, la jonction 83 est constituée par deux brides de fixation 831 et 832.

La bride de fixation 831 est enchâssée et soudée à la canalisation 81 : cette bride est également représentée en coupe longitudinale radiale en figure 6. La bride de fixation 832 est enchâssée et soudée à la canalisation 82.

Les brides de fixation 831 et 832 sont agencées pour fixer ensemble les deux canalisations 81 et 82, avec des moyens de fixation de type vis-écrou (non représentés).

Le dispositif de test d'étanchéité mis en oeuvre dans l'installation 80 de la figure 6 est équivalent au dispositif de la figure 2 :
- la bride 831 du dispositif de la figure 6 correspond à la bride 4 du dispositif de la figure 2 ;
- la canalisation 81 du dispositif de la figure 6 correspond au réservoir sur lequel peut être montée la bride 4 du dispositif de la figure 2 ;
- l'ensemble constitué par la bride 832 et la canalisation 82 du dispositif de la figure 6 correspond au couvercle 3 du dispositif de la figure 2.

Par conséquent, tous les modes de réalisation décrits ci-dessus en référence aux figures 2 à 5 s'appliquent mutatis mutandis à la variante de réalisation de la figure 6 en ce qui concerne notamment :
- le système de pressurisation (non représenté en Fig. 6),
- le système de mesure de pression (non représenté en Fig. 6),
- la chambre de pressurisation 820,
- les éléments d'étanchéité 821 et 822.

Notamment, dans cet exemple, les brides de fixation 831 et 832 sont agencées pour délimiter la chambre de pressurisation 820. La chambre de pressurisation 820 est donc délimitée par les deux éléments d'étanchéité 821 et 822 et par les brides de fixation 831 et 832.

### Procédé de test d'étanchéité

L'invention porte aussi sur un procédé de test d'étanchéité d'une installation selon la première ou la deuxième variante de réalisation décrite ci-dessus.

Le procédé consiste à mettre en oeuvre les étapes suivantes :
- une mise sous pression du fluide de test dans la chambre de pressurisation 20, 820 à l'aide du système de pressurisation 11 ; typiquement, le fluide de test est de l'air comprimé et on met la chambre de pressurisation à une pression prédéterminée ; dans l'installation 70 de la figure 5, cette pression prédéterminée est typiquement inférieure ou égale 0,7 MPa ;
- une mesure de la pression du fluide de test dans la chambre de pressurisation 20, 820 à l'aide du système de mesure de pression 12, typiquement un manomètre.

Lorsque la pression prédéterminée est atteinte, on ferme une vanne (non représentée) d'arrivée de fluide de test - le fluide de test ne peut donc plus sortir de la chambre de pressurisation 20 par l'orifice 31.

Après une durée prédéterminée, typiquement supérieure à dix minutes, de préférence égale à trente minutes, on contrôle la pression mesurée par le manomètre.

Si la pression ainsi contrôlée est identique à la pression prédéterminée initialement atteinte, l'étanchéité peut être jugée satisfaisante.

En cas de diminution de pression, l'étanchéité peut être jugée insatisfaisante et on peut réaliser une nouvelle opération de démontage-remontage du dispositif en remplaçant les joints.

Bien sûr, l'invention n'est pas limitée aux exemples qui viennent d'être décrits et de nombreux aménagements peuvent être apportés à ces exemples sans sortir du cadre de l'invention. Par exemple, les éléments d'étanchéité 21, 22, 821, 822 peuvent être des joints plats ou de section carrée. De plus, les différentes caractéristiques, formes, variantes et modes de réalisation de l'invention peuvent être associés les uns avec les autres selon diverses combinaisons dans la mesure où ils ne sont pas incompatibles ou exclusifs les uns des autres.

## Revendications

1. Dispositif de test d'étanchéité d'une installation (70, 80) :
- du type comprenant un réservoir (71) destiné à stocker un premier fluide (79) dans un espace intérieur (711) de ce réservoir, ou
- du type comprenant deux canalisations (81, 82) et une jonction (83) entre ces deux canalisations, ces canalisations étant destinées à transporter un premier fluide (89) dans un espace intérieur (811) de ces canalisations,
ce dispositif comprenant :
- un système de pressurisation (11) agencé pour mettre un fluide de test sous pression dans le dispositif, et
- un système de mesure de pression (12) agencé pour mesurer la pression du fluide de test dans le dispositif,
ce dispositif comprenant en outre :
- une chambre de pressurisation (20), et
- un premier élément d'étanchéité (21) agencé pour isoler la chambre de pressurisation (20) dudit espace intérieur (711, 811),
le système de pressurisation (11) étant agencé pour mettre le fluide de test sous pression dans la chambre de pressurisation (20), et
le système de mesure de pression (12) étant agencé pour mesurer la pression du fluide de test dans la chambre de pressurisation (20),
étant **caractérisé en ce que** la chambre de pressurisation (20) est annulaire et délimitée par une bride de fixation,
et **en ce que** le dispositif comprend en outre un couvercle (3, 73) et la bride de fixation (4, 74), la bride de fixation étant agencée sur le réservoir pour fixer un couvercle (3, 73) au réservoir (71), la bride de fixation (4, 74) étant agencée pour fixer le couvercle (3, 73) au réservoir (71), le couvercle (3, 73) et la bride de fixation (4, 74) étant agencés pour délimiter la chambre de pressurisation (20),
ou **en ce que** la bride de fixation est agencée sur une canalisation pour constituer une jonction avec la bride de fixation d'une canalisation, ces brides de fixation (831, 832) étant agencées pour fixer ensemble les deux canalisations (81, 82), et pour délimiter la chambre de pressurisation (20).

2. Dispositif selon la revendication 1, **caractérisé en ce qu'**il comprend en outre un deuxième élément d'étanchéité (22) agencé pour isoler la chambre de pressurisation (20) de l'extérieur de ladite installation.

3. Dispositif selon la revendication 2, **caractérisé en ce que** lesdits premier (21) et deuxième (22) éléments d'étanchéité délimitent la chambre de pressurisation (20).

4. Dispositif selon l'une quelconque des revendications 1 à 3, ladite installation comprenant un réservoir (71), ce dispositif étant **caractérisé en ce qu'**il comprend en outre un couvercle (3, 73) et une bride de fixation (4, 74), le couvercle (3, 73) étant agencé pour fermer le réservoir (71), la bride de fixation (4, 74) étant agencée pour fixer le couvercle (3, 73) au réservoir (71), le couvercle (3, 73) et la bride de fixation (4, 74) étant agencés pour délimiter la chambre de pressurisation (20).

5. Dispositif selon la revendication 4, **caractérisé en ce que** le couvercle (3, 73) et/ou la bride de fixation (4, 74) comprennent une rainure (41) et **en ce que** la chambre de pressurisation (20) a un volume constitué par cette rainure (41).

6. Dispositif selon l'une quelconque des revendications 1 à 3, ladite installation comprenant deux canalisations (81, 82) et une jonction (83) entre ces deux canalisations, ce dispositif étant **caractérisé en ce qu'**il comprend en outre une ou plusieurs brides de fixation (831, 832) constituant ladite jonction (83), ces brides de fixation (831, 832) étant agencées pour :
- fixer ensemble les deux canalisations (81, 82), et
- délimiter la chambre de pressurisation (20).

7. Dispositif selon l'une quelconque des revendications précédentes, **caractérisé en ce que** la chambre de pressurisation (20) est annulaire.

8. Procédé de test d'étanchéité d'une installation (70, 80) :
- du type comprenant un réservoir (71) destiné à stocker un premier fluide (79) dans un espace intérieur (711) de ce réservoir, ou
- du type comprenant deux canalisations (81, 82) et une jonction (83) entre ces deux canalisations, ces canalisations étant destinées à transporter un premier fluide (89) dans un espace intérieur (811) de ces canalisations,
ce procédé mettant en oeuvre un dispositif selon l'une quelconque des revendications précédentes et comprenant :
- une mise sous pression du fluide de test dans la chambre de pressurisation (20) à l'aide du système de pressurisation (11),
- une mesure de la pression du fluide de test dans la chambre de pressurisation (20) à l'aide du système de mesure de pression (12).

## Patentansprüche

1. Vorrichtung zum Prüfen der Dichtigkeit einer Anlage (70, 80):
- vom Typ, der einen Behälter (71) umfasst, der dazu bestimmt ist, ein erstes Fluid (79) in einem Innenraum (711) des Behälters zu speichern, oder
- vom Typ, der zwei Leitungen (81, 82) und eine Verbindungsstelle (83) zwischen den beiden Leitungen umfasst, wobei die Leitungen dazu bestimmt sind, ein erstes Fluid (89) in einen Innenraum (811) der Leitungen zu transportieren,
wobei die Vorrichtung Folgendes umfasst:
- ein Druckbeaufschlagungssystem (11), das dazu angeordnet ist, ein Testfluid in der Vorrichtung mit Druck zu beaufschlagen, und
- ein Druckmesssystem (12), das dazu angeordnet ist, den Druck des Testfluids in der Vorrichtung zu messen,
wobei die Vorrichtung ferner Folgendes umfasst:
- eine Druckbeaufschlagungskammer (20), und
- ein erstes Dichtigkeitselement (21), das dazu angeordnet ist, die Druckbeaufschlagungskammer (20) des Innenraums (711, 811) zu isolieren,
wobei das Druckbeaufschlagungssystem (11) dazu angeordnet ist, das Testfluid in der Druckbeaufschlagungskammer (20) mit Druck zu beaufschlagen, und
wobei das Druckmesssystem (12) dazu angeordnet ist, den Druck des Testfluids in der Druckbeaufschlagungskammer (20) zu messen,
**dadurch gekennzeichnet, dass** die Druckbeaufschlagungskammer (20) ringförmig und durch einen Befestigungsflansch begrenzt ist,
und dadurch, dass die Vorrichtung ferner einen Deckel (3, 73) und den Befestigungsflansch (4, 74) umfasst, wobei der Befestigungsflansch am Behälter angeordnet ist, um einen Deckel (3, 73) am Behälter (71) zu befestigen, der Befestigungsflansch (4, 74) angeordnet ist, um den Deckel (3, 73) am Behälter (71) zu befestigen, und der Deckel (3, 73) und der Befestigungsflansch (4, 74) angeordnet sind, um die Druckbeaufschlagungskammer (20) zu begrenzen,
oder dadurch, dass der Befestigungsflansch an einer Leitung angeordnet ist, um eine Verbindungsstelle mit dem Befestigungsflansch einer Leitung zu bilden, wobei die Befestigungsflansche (831, 832) dazu angeordnet sind, gemeinsam die beiden Leitungen (81, 82) zu befestigen und die Druckbeaufschlagungskammer (20) zu begrenzen.

2. Vorrichtung nach Anspruch 1, **dadurch gekennzeichnet, dass** sie ferner ein zweites Dichtigkeitselement (22) umfasst, das dazu angeordnet ist, die Druckbeaufschlagungskammer (20) von der Außenseite der Anlage zu isolieren.

3. Vorrichtung nach Anspruch 2, **dadurch gekennzeichnet, dass** das erste (21) und das zweite (22) Dichtigkeitselement die Druckbeaufschlagungskammer (20) begrenzen.

4. Vorrichtung nach einem der Ansprüche 1 bis 3, wobei die Anlage einen Behälter (71) umfasst, wobei die Vorrichtung **dadurch gekennzeichnet ist, dass** sie ferner einen Deckel (3, 73) und einen Befestigungsflansch (4, 74) umfasst, wobei der Deckel (3, 73) dazu angeordnet ist, den Behälter (71) zu verschließen, der Befestigungsflansch (4, 74) dazu angeordnet ist, den Deckel (3, 73) am Behälter (71) zu befestigen, und der Deckel (3, 73) und der Befestigungsflansch (4, 74) dazu angeordnet sind, die Druckbeaufschlagungskammer (20) zu begrenzen.

5. Vorrichtung nach Anspruch 4, **dadurch gekennzeichnet, dass** der Deckel (3, 73) und/oder der Befestigungsflansch (4, 74) eine Rille (41) umfassen und dass die Druckbeaufschlagungskammer (20) ein durch die Rille (41) gebildetes Volumen aufweist.

6. Vorrichtung nach einem der Ansprüche 1 bis 3, wobei die Anlage zwei Leitungen (81, 82) und eine Verbindungsstelle (83) zwischen den beiden Leitungen umfasst, wobei die Vorrichtung **dadurch gekennzeichnet ist, dass** sie ferner einen oder mehrere Befestiungsflansche (831, 832) umfasst, die die Verbindungsstelle (83) bilden, wobei die Befestigungsflansche (831, 832) für Folgendes angeordnet sind:
- gemeinsames Befestigen der beiden Leitungen (81, 82), und
- Begrenzen der Druckbeaufschlagungskammer (20).

7. Vorrichtung nach einem der vorhergehenden Ansprüche, **dadurch gekennzeichnet, dass** die Druckbeaufschlagungskammer (20) ringförmig ist.

8. Verfahren zum Prüfen der Dichtigkeit einer Anlage (70, 80):
- vom Typ, der einen Behälter (71) umfasst, der dazu bestimmt ist, ein erstes Fluid (79) in einem Innenraum (711) des Behälters zu speichern, oder
- vom Typ, der zwei Leitungen (81, 82) und eine Verbindungsstelle (83) zwischen den beiden Leitungen umfasst, wobei die Leitungen dazu bestimmt sind, ein erstes Fluid (89) in einen Innenraum (811) der Leitungen zu transportieren,
wobei das Verfahren eine Vorrichtung nach einem der vorhergehenden Ansprüche implementiert und Folgendes umfasst:
- Beaufschlagen des Testfluids in der Druckbeaufschlagungskammer (20) mit Druck mit Hilfe des Druckbeaufschlagungssystems (11),
- Messens des Drucks des Testfluids in der Druckbeaufschlagungskammer (20) mit Hilfe des Druckmesssystems (12).

## Claims

1. A device for testing the sealing of an installation (70, 80):
- of the type comprising a tank (71) intended to store a first fluid (79) in an interior space (711) of this tank, or
- of the type comprising two pipes (81, 82) and a junction (83) between these two pipes, these pipes being intended to transport a first fluid (89) in an interior space (811) of these pipes,
this device comprising:
- a pressurisation system (11) arranged to pressurise a test fluid in the device, and
- a pressure measuring system (12) arranged to measure the pressure of the test fluid in the device,
this device further comprising:
- a pressurisation chamber (20), and
- a first sealing element (21) arranged to isolate the pressurisation chamber (20) from said interior space (711, 811),
the pressurisation system (11) being arranged to pressurise the test fluid in the pressurisation chamber (20), and
the pressure measuring system (12) being arranged to measure the pressure of the test fluid in the pressurisation chamber (20),
being **characterised in that** the pressurisation chamber (20) is annular and delimited by a fixing flange,
and **in that** the device further comprises a cover (3, 73) and the fixing flange (4, 74), the fixing flange being arranged on the tank to fix a cover (3, 73) to the tank (71), the fixing flange (4, 74) being arranged to fix the cover (3, 73) to the tank (71), the cover (3, 73) and the fixing flange (4, 74) being arranged to delimit the pressurisation chamber (20),
or **in that** the fixing flange is arranged on a pipe to form a junction with the fixing flange of a pipe, these fixing flanges (831, 832) being arranged to fix the two pipes (81, 82) together, and to delimit the pressurisation chamber (20).

2. The device according to claim 1, **characterised in that** it further comprises a second sealing element (22) arranged to isolate the pressurisation chamber (20) from the outside of said installation.

3. The device according to claim 2, **characterised in that** said first (21) and second (22) sealing elements delimit the pressurisation chamber (20).

4. The device according to any one of claims 1 to 3, said installation comprising a tank (71), this device being **characterised in that** it further comprises a cover (3, 73) and a fixing flange (4, 74), the cover (3, 73) being arranged to close the tank (71), the fixing flange (4, 74) being arranged to fix the cover (3, 73) to the tank (71), the cover (3, 73) and the fixing flange (4, 74) being arranged to delimit the pressurisation chamber (20) .

5. The device according to claim 4, **characterised in that** the cover (3, 73) and/or the fixing flange (4, 74) comprise a groove (41) and **in that** the pressurisation chamber (20) has a volume constituted by this groove (41) .

6. The device according to any one of claims 1 to 3, said installation comprising two pipes (81, 82) and a junction (83) between these two pipes, this device being **characterised in that** it further comprises one or more fixing flanges (831, 832) constituting said junction (83), these fixing flanges (831, 832) being arranged to:
- fix the two pipes together (81, 82), and
- delimit the pressurisation chamber (20).

7. The device according to any one of the preceding claims, **characterised in that** the pressurisation chamber (20) is annular.

8. A method for testing the sealing of an installation (70, 80):
- of the type comprising a tank (71) intended to store a first fluid (79) in an interior space (711) of this tank, or
- of the type comprising two pipes (81, 82) and a junction (83) between these two pipes, these pipes being intended to transport a first fluid (89) in an interior space (811) of these pipes,
this method implementing a device according to any one of the preceding claims and comprising:
- pressurising the test fluid in the pressurisation chamber (20) using the pressurisation system (11),
- measuring the pressure of the test fluid in the pressurisation chamber (20) using the pressure measuring system (12).
